# EUROPEAN PATENT SPECIFICATION

(11) **EP 0 572 411 B1**
(45) Date of publication and mention of the grant of the patent: **13.08.2003**
(21) Application number: 91920181.4
(22) Date of filing: 24.10.1991
(51) Int. Cl.: E04C 2/54

(54) **LIGHT ADMITTING THERMAL INSULATING STRUCTURE**
LICHTDURCHLÄSSIGE, THERMISCHE ISOLATIONSSTRUKTUR
STRUCTURE D'ISOLATION THERMIQUE LAISSANT PASSER LA LUMIERE

(30) Priority: 19.03.1991 US 670783
(43) Date of publication of application: 08.12.1993
(73) Proprietor: CHAHROUDI, Day, Cedar Crest, NM 87008 (US)
(72) Inventor: CHAHROUDI, Day, Cedar Crest, NM 87008 (US)
(74) Representative: Cheyne, John Robert Alexander Mackenzie
(86) International application number: US9107620
(87) International publication number: WO92016702

(56) References cited:
- US-A- 3 953 110
- US-A- 4 085 999
- US-A- 4 198 796
- US-A- 4 307 942

## Description

### BACKGROUND OF THE INVENTION

The present invention relates to an improved light admitting thermal insulating structure which prevents heat loss by thermal radiation, convection and conduction, including controllable transmission and/or reflection and/or absorption to light, and a convection baffle which transmits light and thermal radiation or "CBTLTR" to prevent convection loss.

Conventional collectors of solar heat include a dark absorber surface that turns sunlight into heat and a transparent cover for this surface to prevent the heat from escaping. The thermal collection efficiency of such a system is determined by the ratio of the resistance to the flow of heat of the transparent cover to the resistance of the rest of the system. By increasing the thermal resistance of the transparent cover without greatly reducing its light transmission, the efficiency and/or operating temperature of the solar heat collector can be greatly improved. It is estimated that two or three times the energy consumed in heating a well insulated building falls on its surface in the form of sunlight. Thus, an insulation that is transparent when the sun shines would provide most of the heating for a structure over most of the United States if it is coupled with a heat storage system for cloudy weather.

In the past the problems of heat loss through conduction, convection and thermal radiation (also called far infrared radiation) and control of sunlight have been dealt with independently. For example, convection and conduction losses are reduced using spaces filled with some fine structural material without consideration of admission of sunlight. Further, sunlight has been blocked using coatings of layers on windows to prevent room overheating but without consideration of a technique for admitting more sunlight when it is desired to increase the heat in the room. Thermal radiation loss has been of little concern since in the latter situation heat loss is desirable and in the former it is not considered.

Since the heat losses by conduction, convection and radiation are in parallel to each other and are of similar magnitudes, an insulation is ineffective unless all three are dealt with simultaneously, as heat will leave by the path of least resistance.

To best understand the invention, reference is made to the Concise Encyclopedia of Science & Technology, Second Edition, McGraw Hill (1989) for a general definition of terms. Specifically, reference is made to Solar Optical Materials, edited by H. G. Hutchins, Permagon Press (1988); Transparent Insulation Materials and Transparent Insulation T2, both edited by L. F. Jesch, Franklin Co. Consultants Ltd. for the German Solar Energy Society (1986 and 1988, respectively); Large Area Chromogenics, edited by C. M. Lampert, SPIE Optical Engineering Press (1988); Spectral Selective Surface for Heating and Cooling Applications, C. G. Granqvist, SPIE Optical Engineering Press ( ) ; Optical Materials Technology of Energy, Efficiency and Solar Energy Conversion, edited by C. G. Granqvist, Vol. 9 (1990), Vol. 8 (1989), Vol. 7 (1988); Material & Optics for Solar Energy Conversion and Advanced Lighting Technology, edited by C. M. Lampert, SPIE Optical Engineering Press (1986); Solar Glazing, Mid Atlantic Energy Association, Topical Conference (1979); and Thermal Shatters and Shades, W. A. Shurcliff, Brickhouse Press, Andover, Mass. ( ). These publications set forth a comprehensive overview of technology related to this invention.

A light admitting insulation may be used in conjunction with an optical shutter to regulate light transmission while preventing the flow of heat. The optical shutter may be a layer or layers covering an aperture. The shutter may be reversibly activated by: (1) its local temperature (thermochromic); (2) incident light intensity (photochromic); (3) both temperature and light (thermophotochromic); or (4) an electric current or field (electrochromic). Thermochromic and thermophotochromic shutters, not in combination with a transparent insulation, are the subject of U.S. Patent 4,307,942 and U.S. Patent Application Serial No. 06,948,039 by the applicant herein entitled "Structure and Preparation of Automatic Light Valves," filed on December 31, 1986. See also, "Thinking Window Switches Off the Sun When it is Hot", Popular Science, March, 1984, and my article "Contractor Designed Passive Heating, Cooling, and Daylighting", U.S. Passive Solar Conference (March 1990).

None of the patents or the application mentioned above provides the important advantages of addressing all forms of heat losses and heat uses for particular applications including the combination of a transparent insulation with a layer of photochromic or thermophotochromic shutter.

US-A-4085999 and US-A-3953110 each disclose a thermal insulating layered structure with variable admittance of light, the structure comprising:
a light transmitting outdoor cover layer;
at least one light admitting thermal insulation layer;
at least one layer of optical shutter material having light transmission which is variable;
an indoor cover layer which is substantially parallel to the outdoor cover layer and which primarily transmits light.

### SUMMARY OF THE INVENTION

It is an object of this invention to provide an improved light admitting insulating structure which simultaneously substantially reduces heat loss by thermal radiation, convection and conduction.

It is a further object of this invention to provide a light admitting thermal structure including an optical shutter having controllable transmissivity to light.

It is a further object of this invention to provide a simple, inexpensive light admitting insulting system for improving the efficiency of collectors for solar space cooling, water heating and reducing heat losses through windows as well as improving the efficiency of solar space heating systems.

According to the present invention, the layers are formed into a building panel in which the indoor and outdoor cover layers are joined with a frame to form a sealed unit in which the insulation and shutter layers are disposed between the outdoor and indoor cover layers.

If the light admitting thermal insulating structure has a light transmitting state it is call a "transparent" or "light transmitting" thermal insulation structure.

In a preferred embodiment there is a partition separating the space between the layers into compartments and reducing convection losses. In the preferred embodiment there is also a thermal radiation suppression device for suppressing thermal radiation transmission.

In more detail, the structure may include a convection baffle which transmits light and thermal radiation (CBTLTR) and one or more low emissivity layers, as well as the or each layer of optical shutter material which controls light transmission. Also, the structure may include an antireflection coating having low light and thermal radiation absorption disposed on one or more of the baffle surfaces. Further, the baffle may be constructed from a polyolefin selected from the group consisting of very high crystallinity polyethylene or very low crystallinity polyethylene thereby defining very low haze polyethylene.

The structure of the present invention is constructed as a thermal insulating building panel which has controllable light admittance. The panel may comprise a convection baffle which transmits light and thermal radiation between the inside and outside of the panel, one or more low emissivity layers near the outside surface of the building, and the optical shutter layer near the inside of the building. It is pointed out that the invention is not limited to the structure described, but is intended to broadly cover processes of converting incident light to other forms of energy by using the inventive light admitting thermal insulting structure.

As pointed out in greater detail below, this invention provides important advantages. Heat losses (by conduction, convection and radiation) are all dealt with simultaneously which prevents heat loss by the path of least resistance. Further, the combination of a transparent insulation with a layer of photochromic or thermophotochromic optical shutters prevent the flow of heat and heat loss while regulating the flow of light.

The invention itself, together with further objects and attendant advantages, will best be understood by reference to the following detailed description taken in conjunction with the accompanying drawings.

### BRIEF DESCRIPTION OF THE DRAWINGS

Figure 1 is a block diagram showing the functional components of a light admitting thermal insulating system;
Figure 2 shows a CBTLTR suitable for suppressing convection heat transfer dividing a cavity into compartments oriented approximately parallel to the aperture it covers;
Figure 3 shows a CBTLTR suitable for suppressing convection heat transfer dividing a cavity into compartments oriented approximately perpendicular to the aperture it covers;
Figure 4 shows a CBTLTR suitable for suppressing convective heat transfer dividing a cavity into compartments using parallel sheets within a frame supporting the edges of the sheets;
Figure 5 is a cross section of light admitting thermal insulting structure using an illustrated modification of the CBTLTR of Figure 4 to illustrate the nature and type of each surface and layer;
Figure 6 is a transparent insulation which is another embodiment of the light admitting thermal insulating structure of Figure 5;
Figure 7 shows the dependence of light transmission on both temperature and incident light intensity for a typical thermophotochromic optical shutter;
Figure 8 shows in cross section a light transmitting building panel such as a wisdom, skylight, or other solar collector, which is another embodiment of Figure 5 using an optical shutter ;
Figure 9 is a cut away view of the panel of Figure 8.

### DETAILED DESCRIPTION OF THE INVENTION

Turning now to the drawings,

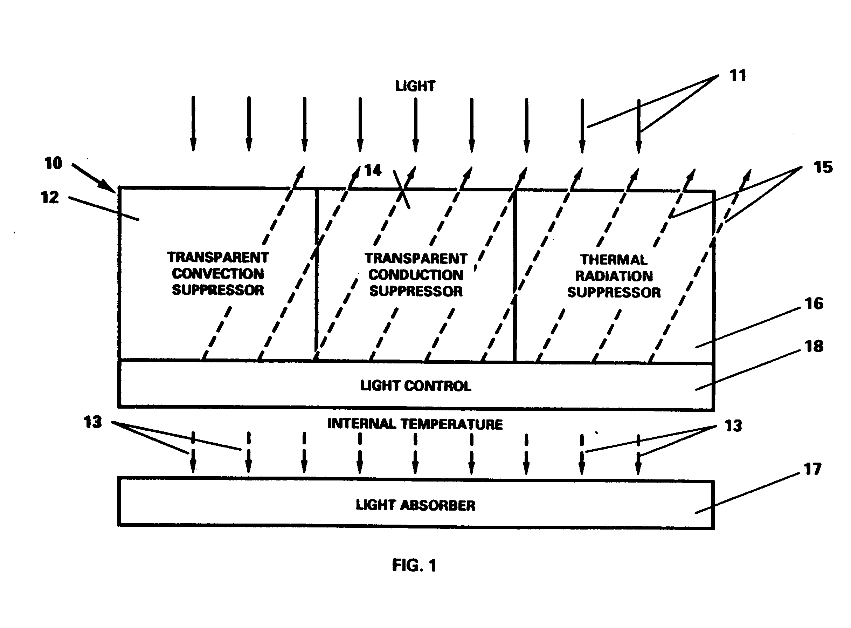

Figure 1 is a functional block diagram of a light admitting thermal insulating structure 10 having controllable transmissivity to light. The insulating structure 10 includes means for suppressing convection, conduction and thermal radiation heat losses, e.g., convection suppressor 12, conduction suppressor 14, and thermal radiation suppressor 16 which is a low emissivity layer. For illustrative purposes, each of the suppressor 12, 14, 16 of thermal transport mechanisms extend over the whole system but are shown distinctly for convenience in explanation. Actually they are superimposed.

A light control 18, such as an optical shutter, adjusts the transmissivity of the structure 10 to light in accordance with the desired illumination level or the temperature of the area whose environment is to be controlled. As shown in Figure 1, the incident light 11 may pass through the light control 18 to provide transmitted light 13 or may be reflected to become reflected light 15. If it is transmitted, it may be absorbed on light absorber 17 which may or may not be an integral part of the structure.

The conduction suppressor 14 may be provided through the use of two or more spaced layers or compartments with a gas, vacuum or other medium between them to prevent conduction.

The thermal radiation suppressor 16 may include one or more coatings or layers of material which reflect and does not emit thermal radiation to prevent its transmission. These layers are called low emissivity layers. They may be transparent or may absorb light. The transmitted light 13 may then be absorbed in light absorber 17, where it turns into heat. If the light absorber 17 is part of the structure, then it may also be combined with the thermal radiation suppressor, herein called a "light absorbing low emissivity layer."

The convection suppressor 12 may include compartmentalizing the space between the layers or providing a vacuum therein. Another example of a thermal and convection suppressor is a finely structured, low density silica or other oxide(s) foam called "aerogel". The compartmentalizing may be accomplished by baffles or partitions which extend transversely between the layers and/or parallel to the layers, such as a CBTLTR, to restrict convective heat transport.

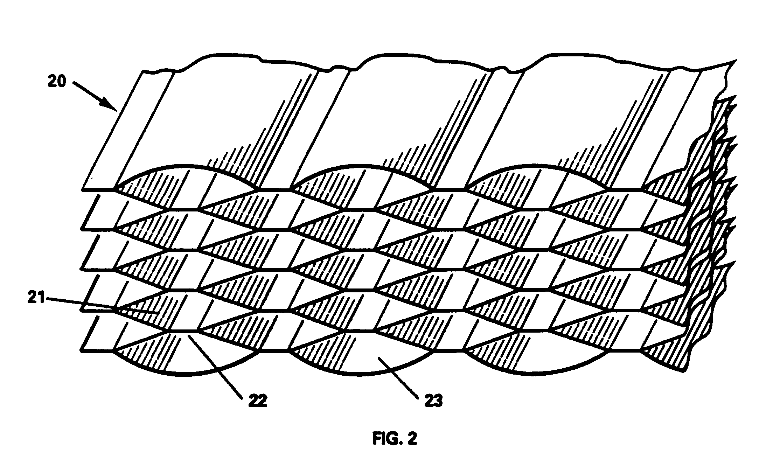

As illustrated in Figures 2, 3 and 4, a CBTLTR can be made from a thin sheet or film of a light and thermal radiation transparent material. Its function is to divide a gas filled cavity into compartments, and to thereby suppress convective heat transfer by the gas inside the cavity.

In Figure 1, the CBTLTR is an example of the convection suppressor 12. Figures 2, 3 and 4 show three possible configurations for CBTLTRs which all divide a cavity into compartments, and thereby suppress convective heat transfer.

Figure 2 shows a CBTLTR made from a polyolefin film 21 (for example, polyethylene) which may be heat sealed 22 together or assembled by another state of the art means. This embodiment of a CBTLTR has its compartments 23 oriented approximately parallel to the aperture it covers.

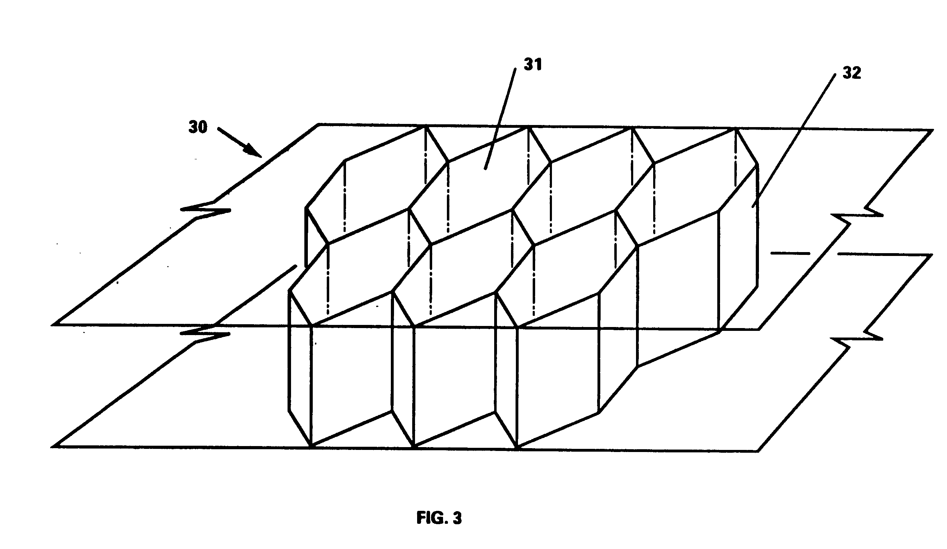

Figure 3 shows a CBTLTR 30 formed from a honeycomb whose plurality of compartments 31 are oriented approximately perpendicular to the aperture it covers. This example of a CBTLTR may also be made from polyethylene film 32.

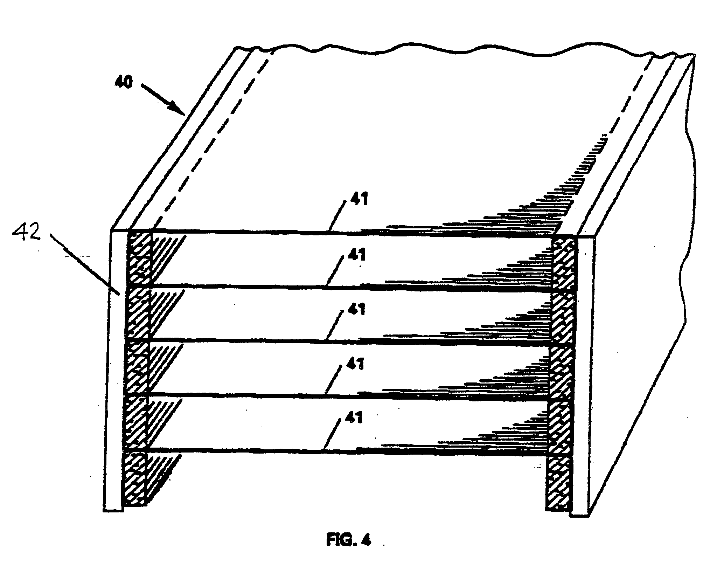

Figure 4 shows a CBTLTR 40 formed from parallel sheets 41 with a frame 42 supporting the edges of the sheets. The sheets may be made from polyethylene film.

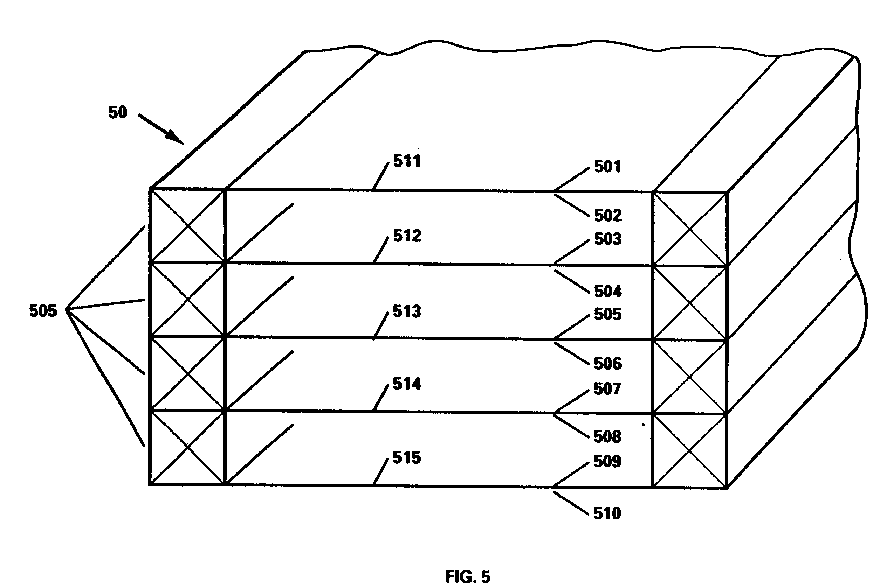

Figure 5 shows a light admitting thermal insulating structure where each surface and layer of the structure are labelled according to the specific function performed, e.g., such as CBTLTR 512, 513, 514 of the Figure 5; cover sheet 515, inner surface of transparent cover sheet 502, etc. By changing what the surfaces and layers are, this figure will be used to illustrate most of the remaining embodiments of this invention. The scope of these embodiments are not limited to Figure 5, however, since Figures 2 or 3 or some other configuration could have been used as easily as Figure 4 as the basis for the figure illustrating the following discussion. For example, while the number of layers shown is five, this number is arbitrary, and is only for the purposes of illustration only. Further, because of the general nature of Figure 5 in illustrating numerous spatial relationships between the various layers and surfaces, other embodiments as hereinafter described may refer to the identifying numerals of the layer or surface as different elements.

The CBTLTR helps keep heat from being transmitted by not absorbing thermal radiation. If the CBTLTR were made of a thermal radiation absorbing and emitting material (that is if it had a high emissivity), then this material would transfer the heat it absorbs from convection of the gas into thermal radiation, which would then transfer the heat out.

A CBTLTR can also be used to improve the thermal resistance and/or reduce the cost of light admitting thermal insulating structures which use one low emissivity layer. It also reduces the cost and light transmission losses of light admitting thermal insulating structures using more than one low emissivity layer by reducing the number of low emissivity layers required to achieve a given resistance. One or more of these low emissivity layer or layers can be either light transmitting or absorbing.

In a light admitting thermal insulating structure which uses more than one low emissivity layer in order to increase its thermal resistance, substituting layers of CBTLTR for one or more of the low emissivity layers will reduce cost and improve light transmission with but only slightly reduced thermal resistance. Thus, it is possible to make higher light transmission and/or lover cost light admitting thermal insulating structures by using CBTLTRs.

A CBTLTR can also be used to improve the thermal resistance of transparent insulations which are used with a high emissivity layer in order to radiate heat. A CBTLTR on top of a high emissivity layer can be used to cool a building when they cover its roof. The high emissivity layer radiates thermal radiation to the upper atmosphere, which in dry climates and at night is as much as 30°F cooler than the temperature of the air at ground level. The CBTLTR forms an insulation by thermally isolating the cooled thermal radiation radiator from warm ambient air. At the same time the CBTLTR is transparent to thermal radiation, allowing the radiator to operate. For these applications, the CBTLTR should be weather resistant, inexpensive, easy to install and creep resistant.

A CBTLTR and a low emissivity layer that absorbs light can be used to absorb solar heat efficiently. In this case, in Figure 1, thermal radiation suppressor 16 and light absorber 17 are combined in one layer. This layer is called a "low emissivity layer which absorbs light" or a "selective black". The CBTLTR 512, 513, 514 of Figure 5 forms a transparent insulation by preventing convection between the transparent outer cover sheet 511 of Figure 5 and the low emissivity, sunlight absorbing inner layer 309 of Figure 5. The inner surface 502 of the transparent cover sheet 511 of Figure can be either a low emissivity or high emissivity layer. For these applications, the CBTLTR should have high light transmission and heat resistance as well as the performance characteristics listed above.

Since chemical degradation processes generally occur as an exponential function of temperature, it is useful to have converters of light to heat, such as solar collectors, become opaque when either the absorber surface or the outside air exceeds a certain temperature. Thus, in a modified embodiment of the invention of Figure 5, a structure which converts light to heat includes a thermochromic shutter (at numeral 502), a CBTLTR (at numerals 512 through 514), and a light absorbing low emissivity layer (at numeral 509). When the outside temperature is high and solar energy is not needed, the shutter is opaque.

Alternately, for use, for example, in a greenhouse having varieties of plants, another embodiment of the invention as illustrated in Figure 5 would define the thermochromic shutter layer (at numeral 509) with a light absorbing layer behind the shutter (at numeral 510), a transparent low emissivity layer (at numeral 502), and the CBTLTR (at numeral 512 through 514). In this case, the converter of light to heat becomes reflective when its absorber surface exceeds a preset temperature.

It should be noted that the converter of light to heat may not be intended as such. Photocells are intended to be a converter of light to electricity and convert light to heat to its own detriment. In this case, a CBTLTR and a low emissivity layer would also be detrimental. The above structures are only three of many possible examples of structures which protect converters of light to other forms of energy with optical shutters.

The CBTLTR and low emissivity layers which transmit light can be used as a building panel or other surfaces which capture solar energy. The sunlight can be used for space heating, illumination and growing plants. In this case, the one or more transparent low emissivity layers can be on any of the CBTLTR surfaces such as shown at numerals 503 through 508 or on the inner surfaces 502, 509 of the transparent covers (or glazings) 511, 515, which face the CBTLTR. In these applications, as in the applications described above, with light absorbing low emissivity layers, the CBTLTR serves to improve the performance of the low emissivity layer or layers by suppressing convection, while not interfering with light transmission.

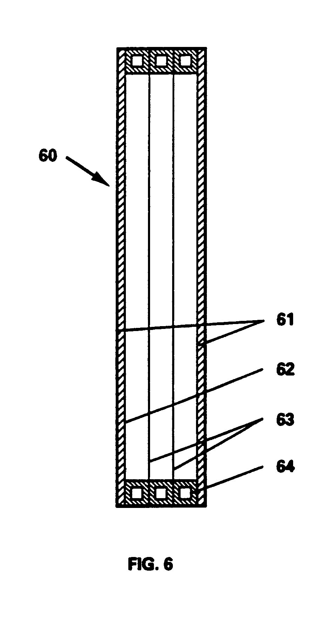

Figure 6 shows a window 60 with a high insulating value of about 1.232 m².K/W (7 square feet hour degree Fahrenheit/BTU) (similar to an opaque insulated wall) and a high light transmission of about 60%. It is made using one transparent low emissivity coating and two layers of CBTLTR. For these applications, the CBTLTR should have all of the performance characteristics listed above, although heat resistance may not be as critical. Additionally, the CBTLTR should not impair viewing through the windows.

As shown in Figure 6, two light transmitting cover layers 61 can be made of glass, preferably of low iron content to prevent absorption and heating by sunlight. Alternatively they can be made of fiber reinforced polymer sheets which may be translucent or can be made from polymer films or sheets. A transparent low emissivity coating 62, two layers of CBTLTR 63, and spacers and seals 64 form the window. Alternatively, more than one transparent low emissivity layer can be used or placed on one or both layers of the CBTLTR 63. The number of layers of CBTLTR is not limited to three as shown in Figure 5 but may be any number suitable for the particular application

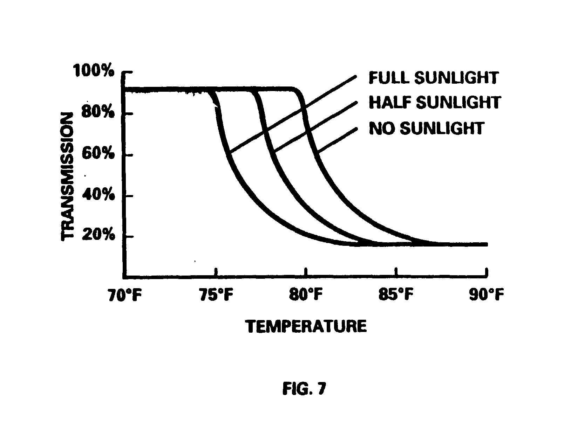

A light admitting thermal insulating structure as shown in Figure 6 may be used in conjunction with an optical shutter to regulate light transmission while preventing the flow of heat. The optical shutter may be a layer or layers covering an aperture. The shutter may be reversibly activated by its local temperature (thermochromic); incident light intensity (photochromic) both temperature and light (thermophotochromic as shown in Figure 7) ; or an electric current or field (eLectrochromic),

A CBTLTR, one or more transparent low emissivity layers, and a thermocbromic, photochromic, thermophotochromic or electrochromic optical shutter layer can be combined to make insulating panels which transmit and regulate light. In Figure 5, the shutter may be on any of the layers 511 through 515, but since it is not transparent to thermal radiation, it is preferably located on the outermost layers 511, 515. The transparent low emissivity layer or layers may be located on any of the inner surfaces 502 through 509. The inner layers, 512 through 514, are preferably CBTLTRs.

These panels can be used as improved collectors of solar energy which can be used, for example, for space heating, illumination or plant growth. These panels are an improvement over existing solar collectors for two reasons. They prevent the collection of solar energy when it is not wanted and are more energy efficient because the transparent insulation prevents unwanted loss or gain of sensible heat.

A thermochromic shutter is used as a light control, as shown by the light control 18 of Figure 1, when it is desired to keep the temperature on the "indoor" side of the panel constant. A photochromic shutter is used when more constant illumination is desired. A thermophotochromic shutter is used when constant temperature and illumination are both desired.

An electrochromic shutter is used when it is desirable to control the light transmission of the shutter externally, rather than by some combination of the incident light intensity and the temperature of the shutter. An electrochromic shutter can be controlled by, for example, a temperature or light sensor, a person or a computer. Unlike many thermochromic and thermophotochromic shutters, electrochromic shutters are usually specularly transmissive and imaging through then is possible. This is an advantage for window applications where a view through the window is usually desired along with the illumination it provides.

As shown in Figure 7, a thermophotochromic shutter whose reflectivity response to temperature and light is used to provide more constant illumination from, for example, a skylight which has transparent insulation, the shutter layer should be located on the indoor side of the transparent insulation. Indoor temperatures are more constant than outdoor temperatures and variations in the temperature of the shutter cause the undesired thermal response of the shutter to mask its desired photoresponse.

A light transmitting building panel, for example, a skylight using an optical shutter, can use a transparent insulation made from one or more transparent low emissivity layers and an CBTLTR. Transparent low emissivity surfaces typically absorb 10% of light. This absorption can make enough heat to mask a thermochromic or thermophotochromic shutter's response to heat or incident light intensity, respectively. Thus, the transparent low emissivity layer or layers should be located away from the thermochromic or thermophotochromic shutter near the outside of the transparent insulation. This location is preferable in some applications for another reason. It keeps the solar heat absorbed by the low emissivity layer or layers near the outside of the building where it can leave without causing unwanted summer heat loads.

Thus, the preferred structure for solar light and/or heat collecting panels using: a thermochromic or thermophotochromic shutter; one or more transparent low emissivity layers; and a CBTLTR, is: the shutter near (that is, adjacent to or forming) the indoor side, the low emissivity layer or layers near the outdoor side, and the CBTLTR inbetween.

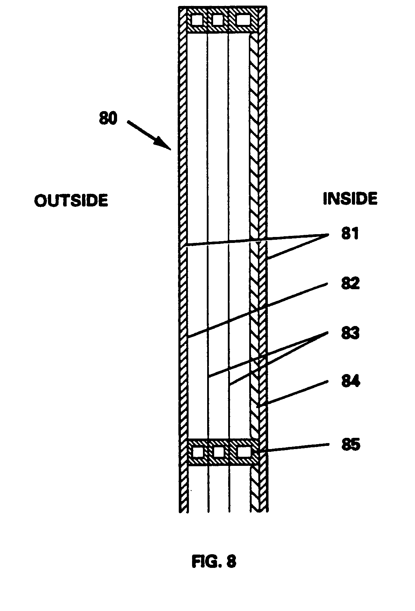

As shown in Figure 8, a cross section of a light transmitting building panel 80 or skylight with this preferred structure is illustrated and is a special embodiment of Figure 5. The panel 80 includes light transmitting cover sheets 81, a low emissivity layer 82, a CTBLTR 83, a thermoptical or thermophotoptical shutter 84, and spacers and seals 85.

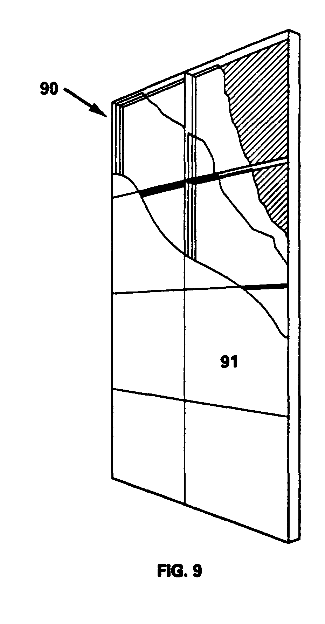

Merely by way of example, Figure 9 illustrates a cut away view of the light transmitting building panel 80 of Figure 8. It is pointed out that there can be more than one transparent low emissivity layer and the low emissivity Layer(s) can be located on the CBTLTR. Also, there can be a different number of layers in the CBTLTR.

The scope of the invention is not to be limited by any of these illustrative figures, as many other configurations for CBTLTRs, building panels and skylights are desirable for different applications.

If a skylight's top surface is domed or faceted, the preferable location for the transparent low emissivity surface may be on the CBTLTR layer closest to the outside of the building because it is difficult to apply a transparent low emissivity layer to a domed surface.

The light transmission of a CBTLTR can be enhanced with antireflection layers. For example, the light transmission of the configurations in Figures 6 and 8 can be increased from about 60% to about 75%, and preferably to about 85%. However, these antireflection layers must not absorb much thermal radiation or they will reduce the CBTLTR's thermal resistance. Low refractive index materials which do not absorb much thermal radiation when their thickness is in the order of 1,000 Å (the approximate thickness of antireflection layers) include: porous and columnar aluminum or silicon oxide and other oxide layers, which may have a graded refractive index and broad band antireflection properties; magnesium fluoride or perfluoropolymer, such as polytetrafluoroethylene, quarter wave layers; fluorinated polymer to unfluorinated polymer graded index layers, etc. These antireflection layers may be placed on any and all surfaces of the CBTLTR and its transparent cover or covers, e.g., in Figure 5, surfaces 501 to 510.

Antiabrasion antireflection coatings (AAR) coatings should have: refractive index in the range of 1.3 to 1.4, the lower, the better; thickness of one quarter wavelength of visible light, or 1,000 Å, at least for the top layer if the AAR is multilayer or has a graded refractive index; hard surface; low coefficient of friction; and for glazing applications, weather and pollution resistant.

AAR coatings on both sides of as plastic film can reduce the film's reflectivity of greater than 8% to 2%. To maintain their high light transmission during use, they are scratch resistant, repel dust and are easy to clean. Almost eliminating reflection makes the film or sheet virtually invisible, increasing packaging materials market appeal, and increasing glazing efficiency. Glazing applications for AAR coated glass and plastic sheet and film include building and car windows, skylights, greenhouses, solar cells and solar collectors.

A polymer surface can be made to have a graded index antireflection layer composed of low refraction index perfluorinated polymer on the outside which has a composition graded to unfluorinated polymer inside. For best results the polymer should be highly fluorinated (more than 70%) on the outside, and slightly fluorinated (less than 30%) on the inside.

For example, the thickness of this film graded index layer can be controlled such that transmission of visible or of photosynthetically active light, or of solar heat is maximum. Such antireflection layers have been made by exposing a polyethylene film to a gas composition of 99.9% nitrogen or argon and 0.1% elemental fluorine for a few minutes at room temperature.

Plastic bottles which are blow molded commercially may have their inside surfaces fluorinated while they are still hot in mold (for greater thickness of fluorination than is required for maximum antireflection) to impart impermeability to oil by exposure to a similar gas mixture.

An advantage of surface fluorination of polymers beyond antireflection is imparting durability to the surface of the polymer where degradation (or weathering or corrosion) of the polymer takes place first. One of the primary means of weather degradation of plastic surfaces is stress crack corrosion, where the plastic produces volatile products from weather degradation, and then shrinks and cracks. The tip of this crack is the site of more rapid corrosion due to the concentration in its small radius of stress from shrinkage and thus the crack propagates rapidly into the bulk of the polymer.

Stability is imparted to the polymer by surface fluorination by at least three mechanisms. First, the surface volume increases with fluorination which places the surface under compression, which forms a prestressed surface more scratch and abrasion resistant and which resists cracking when the surface is bent, such as in the creasing of a plastic film.
Second, fluorination prevents degradation because fluorinated polymers are the most degradation resistant. Third, fluorinated polymers have a much lower coefficient of friction than unfluorinated polymers, which imparts greater abrasion resistance. Surface fluorination may also be used with the hindered amine stabilizers described below, to thereby impart the many attendant advantages of each to the selected polymer.

While it has long been known that polyolefins, and preferably polyethylene, are the only highly thermal radiation transparent polymeric films, polyethylene has not been usable in transparent insulations such as low emissivity windows because of: (1) its haze and consequent poor light transmission; (2) its vulnerability to solar ultraviolet, oxidation and other degradation; and (3) its creep. The haze in polyethylene is caused by partial crystallization, so very low haze polyethylene films can be made by both very high and very low crystallinity. These polyolefin films can be stabilized for resistance to degradation with polymeric hindered amine, for example, Cyasorb 3346 made by American cyanamide, at a loading from about 0.1% to about 0.5%. Such films have passed accelerated aging equivalent to 30 years of solar UV filtered through commercial glass. To prevent creep, these polyolefins films can be cross linked by the conventional methods for polyethylene: electron curtain, UV light, or heat; each with appropriate cross linking additives, such as polysaturated compounds, e.g., octadiene and methylene bis acrylamide.

Very high crystallinity polyethylene films are preferably made from highly linear, high molecular weight, narrow molecular weight distribution polyethylene resin or a linear medium or low density polyethylene resin. All of these polyethylene resins are made by a low pressure polymerization process typically using a Ziegler type catalyst. Low pressure polymerization also produces fewer degradation sites. This polyethylene film may be uniaxially oriented and calendared simultaneously to increase its crystallinity and light transmission both to greater than 90%. A suitable polyethylene film is available from Tredagar Films, Inc. under the trade name of MONAX, The linear medium and low density materials may then be transversely oriented on a tenter to produce more symmetrical biaxial heat shrink properties. Heat shrinking at predetermined temperatures may be used to easily assemble essentially wrinkle free CBTLTRs.

Very low crystallinity polyethylene is preferably made from low density or ultra low density linear, low pressure polymerized polyethylene which is quenched rapidly immediately after extrusion with a chill drum or water to prevent crystallization. While various polymers and combinations of a mixture of different types of polymers may be used, it is preferred to use primarily polyolefin, meaning a polymer composition of at least 80% polyolefin.

variations on the embodiments described above are possible. For example, in Figure 1, the light control layer may be either a photochromic or thermophotochromic shutter while the combination of the transparent convection, conduction and thermal radiation suppressor constitutes a transparent insulation.

In another variation, a transparent insulation with a photochromic or thermophotochromic shutter can be used to regulate the transmission of solar light and/or heat into a building. A skylight can use a photochromic shutter to reduce the fluctuations in transmitted light caused by variations in incident light and thereby provide more constant illumination or to minimize unwanted solar heat gains in the summer.

In yet another variation, a thermophotochromic shutter can be used to maximize the growth of plants in a greenhouse. The plants' growth inhibition from heat stress is minimized by the thermal response of the shutter while the greenhouses' cooling costs are minimized by the photoresponse of the shutter.

Both the skylight and the greenhouse applications would benefit from using a transparent insulation in conjunction with the shutter. The transparent insulation would reduce heating and cooling costs of both the greenhouse and the building with the skylight.

Of course, it should be understood that a wide range of changes and modifications can be made to the preferred embodiment described above. It is therefore intended that the foregoing detailed description be understood that it is the following claims, including all equivalents, which are intended to define the scope of this invention.

## Claims

1. A thermal insulating layered structure with variable admittance of light, the structure comprising:
a light transmitting outdoor cover layer (511);
at least one light admitting thermal insulation layer;
at least one layer of optical shutter material having light transmission which is variable;
an indoor cover layer (515) which is substantially parallel to the outdoor cover layer and which either primarily transmits or primarily absorbs light;
**characterised in that** the layers are formed into a building panel (90) in which the indoor and outdoor cover layers are joined with a frame to form a sealed unit (60, 80, 90) in which the insulation and shutter layers are disposed between the outdoor and indoor cover layers

2. A structure as claimed in claim 1, wherein the thermal insulation layer comprises one or more layers having a low emissivity coating (502-509), the layers of the structure being spaced apart by gas or vacuum layers.

3. A structure as claimed in claim 1, wherein the thermal insulation layer includes one to four transparent low emissivity coatings and may include a single absorbing low emissivity coating.

4. A structure as claimed in claim 1, 2, or 3, wherein the thermal insulation layer includes at least one gas layer and a convection baffle which is substantially transparent to light and thermal radiation (20, 32, 512-514).

5. A structure as claimed in claim 1 or 4, wherein the thermal insulation layer includes a convection baffle in the form of a honeycomb (32) which is substantially transparent to light and which is arranged so that the cells of the honeycomb extend substantially perpendicularly to the cover layers.

6. A structure as claimed in claim 4 or 5, wherein the convection baffle is of a material of more than 80% polyolefin.

7. A structure as claimed in claim 6, wherein the polyolefin is a polyethylene material having a crystallinity which is either very high or very low.

8. A structure as claimed in claim 6, wherein the polyolefin contains 0.1 to 0.5% by weight of hindered amine stabilizers.

9. A structure as claimed in claim 6, wherein the polyolefin is cross-linked.

10. A structure as claimed in any one of claims 4 to 9, wherein the convection baffle has at least one transparent low emissivity coating (503-508).

11. A structure as claimed in any one of claims 4 to 10, wherein one or more of the indoor and outdoor cover layers, and the convection baffle has at least one antireflective coating (501-510).

12. A structure as claimed in claim 1, wherein the thermal insulation layer comprises between three and ten layers (511-515) which are substantially transparent to light and substantially reflective or absorptive of thermal radiation, with each layer separated from the adjacent layer by a layer of gas.

13. A structure as claimed in claim 1, wherein the thermal insulation layer comprises a layer of aerogel material.

14. A structure as claimed in any one of the preceding claims, wherein the indoor cover layer primarily absorbs light (17, 515).

15. A structure as claimed in claim 1, wherein the indoor cover layer has a low emissivity coating (509).

16. A structure as claimed in claim 14 or 15, wherein the indoor cover layer has a light absorbing low emissivity layer (509).

17. A structure as claimed in claim 15, wherein the outdoor cover layer has a transparent low emissivity coating (502).

18. A structure as claimed in any one of the claims 15 to 17 including a vacuum between the indoor and outdoor cover layers.

19. A structure as claimed in any one of the preceding claims, wherein the indoor cover layer (515) includes a photoelectric cell (509).

20. A structure as claimed in any one of the preceding claims, wherein the or at least one of the optical shutter material layers is photochromic.

21. A structure as claimed in any one of claims 1 to 19, wherein the or at least one of the optical shutters material layers is thermophotochromic.

22. A structure as claimed in any one of claims 1 to 19, wherein the or at least one of the optical shutter material layers is electrochromic.

23. A structure as claimed in any one of claims 1 to 19, wherein the or at least one of the optical shutter material layers is thermochromic.

24. A structure as claimed in claim 23, and in claim 2 or 3, with thermochromic shutters (502 and 509) placed on both the outdoor and indoor cover layers (511 and 515), and with a light admitting thermal insulation which is comprised of one or more transparent low emissivity coatings placed adjacent to one to three layers either of vacuum or of gas.

25. The structure as claimed in claim 24, with the insulation including one to three layers of vacuum, and with an indoor cover which primarily transmits light.

26. The structure as claimed in claim 24, with the insulation including one to three layers of vacuum, and with an indoor cover which primarily absorbs light.

27. The structure as claimed in claim 24, with the insulation including layers of gas, and with an indoor cover which primarily transmits light.

28. The structure as claimed in claim 24, with the insulation including layers of gas, and with an indoor cover which primarily absorbs light.

29. A structure as claimed in any one of the preceding claims, including at least one antireflective coating (501-510)

30. A structure as claimed in claim 29, wherein the or each antireflective coating (501-510) has a graded refractive index.

31. A structure as claimed in claim 29, wherein the or each antireflective coating (501-510) is made from a fluorinated polymer.

32. A structure as claimed in claim 29, wherein the or each antireflective coating (501-510) is made from a porous or columnar metal oxide.

## Patentansprüche

1. Thermisch isolierende Schichtstruktur mit variablem Lichteinlass, welche folgendes aufweist:
eine lichtdurchlässige Außen-Deckschicht (511) ;
mindestens eine Licht eintreten lassende thermische Isolationsschicht;
mindestens eine Schicht eines optischen Sperrmaterials, das eine variable Lichtdurchlässigkeit aufweist;
eine Innen-Deckschicht (515), die im Wesentlichen parallel zur Außen-Deckschicht ist und die entweder primär Licht durchlässt oder primär Licht absorbiert;
**dadurch gekennzeichnet, dass** die Schichten zu einer Bauplatte (90) ausgebildet sind, bei der die Innen- und Außen-Deckschichten mit einem Rahmen verbunden sind, um eine abgedichtete Einheit (60, 80, 90) zu bilden, wobei die Isolations- und Sperrschichten zwischen der Außen- und Innen-Deckschicht angeordnet sind.

2. Struktur nach Anspruch 1, **dadurch gekennzeichnet, dass** die thermische Isolationsschicht eine oder mehrere Schichten umfasst, welche eine Beschichtung (502-509) mit niedrigem Emissionsvermögen aufweisen, wobei die Schichten der Struktur durch Gas- oder Vakuumschichten beabstandet sind.

3. Struktur nach Anspruch 1, **dadurch gekennzeichnet, dass** die thermische Isolationsschicht eine bis vier transparente Beschichtungen mit geringem Emissionsvermögen beinhaltet und eine einzelne absorbierende Beschichtung mit niedrigem Emissionsvermögen aufweisen kann.

4. Struktur nach Anspruch 1, 2 oder 3, **dadurch gekennzeichnet, dass** die thermische Isolationsschicht mindestens eine Gasschicht und eine Konvektions-Trennwand umfasst, die im Wesentlichen durchlässig für Licht und thermische Strahlung (20, 32, 512-514) ist.

5. Struktur nach Anspruch 1 oder 4, **dadurch gekennzeichnet, dass** die thermische Isolationsschicht eine Konvektions-Trennwand in Form einer Honigwabe (32) aufweist, die im Wesentlichen transparent für Licht und so angeordnet ist, dass die Zellen der Honigwabe sich im Wesentlichen senkrecht zu den Deckschichten erstrecken.

6. Struktur nach Anspruch 4 oder 5, **dadurch gekennzeichnet, dass** die Konvektions-Trennwand aus einem Material mit mehr als 80% Polyolefin ist.

7. Struktur nach Anspruch 6, **dadurch gekennzeichnet, dass** das Polyolefin ein Polyethylenmaterial mit einer Kristallinität ist, die entweder sehr hoch oder sehr niedrig ist.

8. Struktur nach Anspruch 6, **dadurch gekennzeichnet, dass** das Polyolefin 0,1 bis 0,5 Gew.% gehinderte Aminstabilisatoren enthält.

9. Struktur nach Anspruch 6, **dadurch gekennzeichnet, dass** das Polyolefin vernetzt ist.

10. Struktur nach einem der Ansprüche 4 bis 9, **dadurch gekennzeichnet, dass** die Konvektions-Trennwand mindestens eine transparente Beschichtung (503-508) mit niedrigem Emissionsvermögen aufweist.

11. Struktur nach einem der Ansprüche 4 bis 10,-**dadurch gekennzeichnet, dass** eine oder mehrere der Innen- und Außen-Deckschichten und die Konvektions-Trennwand mindestens eine antireflektive Beschichtung (501-510) aufweisen.

12. Struktur nach Anspruch 1, **dadurch gekennzeichnet, dass** die thermische Isolationsschicht zwischen drei und zehn Schichten (511-515) umfasst, die im Wesentlichen transparent für Licht sind und thermische Strahlung im Wesentlichen reflektieren oder absorbieren, wobei jede Schicht von der benachbarten Schicht durch eine Gasschicht getrennt ist.

13. Struktur nach Anspruch 1, **dadurch gekennzeichnet, dass** die thermische Isolationsschicht eine Schicht aus Aerogelmaterial aufweist.

14. Struktur nach einem der vorstehenden Ansprüche, **dadurch gekennzeichnet, dass** die Innen-Deckschicht primär Licht (7, 515) absorbiert.

15. Struktur nach Anspruch 1, **dadurch gekennzeichnet, dass** die Innen-Deckschicht eine Beschichtung (509) mit niedrigem Emissionsvermögen aufweist.

16. Struktur nach Anspruch 14 oder 15, **dadurch gekennzeichnet, dass** die Innen-Deckschicht eine lichtabsorbierende Schicht (509) mit niedrigem Emissionsvermögen aufweist.

17. Struktur nach Anspruch 15, **dadurch gekennzeichnet, dass** die Außen-Deckschicht eine transparente Beschichtung (502) mit niedrigem Emissionsvermögen aufweist.

18. Struktur nach einem der Ansprüche 15 bis 17, **dadurch gekennzeichnet, dass** sie ein Vakuum zwischen der Innen- und Außendeckschicht aufweist.

19. Struktur nach einem der vorstehenden Ansprüche, **dadurch gekennzeichnet, dass** die Innen-Deckschicht (515) eine photoelektrische Zelle (509) aufweist.

20. Struktur nach einem der vorstehenden Ansprüche, **dadurch gekennzeichnet, dass** die oder zumindest eine der Schichten aus optischem Sperrmaterial photchrom ist.

21. Struktur nach einem der Ansprüche 1 bis 19, **dadurch gekennzeichnet, dass** die oder mindestens eine der Schichten aus optischem Sperrmaterial thermophotochrom ist.

22. Struktur nach einem der Ansprüche 1 bis 19, **dadurch gekennzeichnet, dass** die oder mindestens eine der Schichten aus optischem Sperrmaterial elektrochrom ist.

23. Struktur nach einem der Ansprüche 1 bis 19, **dadurch gekennzeichnet, dass** die oder mindestens eine der Schichten aus optischem Sperrmaterial thermochrom ist.

24. Struktur nach Anspruch 23 und nach Anspruch 2 oder 3, **dadurch gekennzeichnet, dass** thermochrome Sperren (502 und 509) sowohl auf der Außen- als auch auf der Innen-Deckschicht (511 und 515) angeordnet sind, wobei eine Licht eintreten lassende thermische Isolation vorhanden ist, die aus einer oder mehreren transparenten Beschichtungen mit niedrigem Emissionsvermögen aufgebaut ist, welche benachbart einer oder dreier Schichten aus Vakuum oder Gas angeordent sind.

25. Struktur nach Anspruch 24, **dadurch gekennzeichnet, dass** die Isolation eine bis drei Vakuumschichten umfasst, wobei eine Innen-Deckschicht vorhanden ist, die hauptsächlich lichtdurchlässig ist.

26. Struktur nach Anspruch 24, **dadurch gekennzeichnet, dass** die Isolation eine bis drei Vakuumschichten umfasst, wobei eine Innen-Deckschicht vorhanden ist, die hauptsächlich Licht absorbiert.

27. Struktur nach Anspruch 24, **dadurch gekennzeichnet, dass** die Isolation Gasschichten umfasst, wobei eine Innen-Deckschicht vorhanden ist, die hauptsächlich Licht überträgt.

28. Struktur nach Anspruch 24, **dadurch gekennzeichnet, dass** die Isolation Gasschichten umfasst, wobei eine Innen-Deckschicht vorhanden ist, die hauptsächlich Licht absorbiert.

29. Struktur nach einem der vorstehenden Ansprüche, **dadurch gekennzeichnet, dass** sie mindestens eine antireflektive Beschichtung (501-510) umfasst.

30. Struktur nach Anspruch 29, **dadurch gekennzeichnet, dass** die oder jede antireflexive Beschichtung (501-510) einen abgestuften Brechungsindex aufweist.

31. Struktur nach Anspruch 29, **dadurch gekennzeichnet, dass** die oder jede antireflektive Beschichtung (501-510) aus einem fluoriniertem Polymer hergestellt ist.

32. Struktur nach Anspruch 29, **dadurch gekennzeichnet, dass** die oder jede antireflektive Beschichtung (501-510) aus einem porösen oder Säulen enthaltenden Metalloxid hergestellt ist.

## Revendications

1. Une structure d'isolation thermique en couches à admittance de lumière variable, la structure comprenant :
une couche de recouvrement extérieur (511) transmettant la lumière ;
au moins une couche d'isolation thermique laissant passer la lumière ;
au moins une couche de matière d'obturation optique présentant une transmission de lumière qui est variable. ;
une couche de recouvrement intérieur (515) qui est sensiblement parallèle à la couche de recouvrement extérieur et qui, soit transmet essentiellement la lumière, soit l'absorbe essentiellement ;
**caractérisée en ce que** les couches sont constituées pour former un panneau de construction (90) dans lequel les couches de recouvrement intérieur et extérieur sont réunies avec un bâti pour former un ensemble étanche (60, 80, 90) dans lequel les couches d'isolation et d'obturation sont disposées entre les couches de recouvrement extérieur et intérieur.

2. Une structure telle que revendiquée à la revendication 1, dans laquelle la couche d'isolation thermique comprend une ou plusieurs couches présentant un revêtement de faible émissivité (502-509), les couches de la structure étant écartées les unes des autres par des couches de gaz ou de vide.

3. Une structure telle que revendiquée à la revendication 1, dans laquelle la couche d'isolation thermique comprend un à quatre revêtements transparents de faible émissivité et peut comprendre un seul revêtement absorbant de faible émissivité.

4. Une structure telle que revendiquée à la revendication 1, 2 ou 3, dans laquelle la couche d'isolation thermique comprend au moins une couche de gaz et un déflecteur de convection qui est sensiblement transparent au rayonnement lumineux et thermique (20, 32, 512-514).

5. Une structure telle que revendiquée à la revendication 1 ou 4, dans laquelle la couche d'isolation thermique comprend un déflecteur de convection en forme de nid d'abeilles (32) qui est sensiblement transparent à la lumière et qui est disposé pour que les cellules du nid d'abeilles s'étendent de manière sensiblement perpendiculaire aux couches de recouvrement.

6. Une structure telle que revendiquée à la revendication 4 ou 5, dans laquelle le déflecteur de convection est en une matière comprenant plus de 80% de polyoléfine.

7. Une structure telle que revendiquée à la revendication 6, dans laquelle la polyoléfine est une matière de polyéthylène ayant un caractère cristallin qui est, soit très élevé, soit très bas.

8. Une structure telle que revendiquée à la revendication 6, dans laquelle la polyoléfine contient de 0,1 à 0,5% en poids de stabilisateurs à base d'amine encombrée.

9. Une structure telle que revendiquée à la revendication 6, dans laquelle la polyoléfine est réticulée.

10. Une structure telle que revendiquée dans une quelconque des revendications 4 à 9, dans laquelle le déflecteur de convection présente au moins un revêtement transparent de faible émissivité (503-508).

11. Une structure telle que revendiquée dans une quelconque des revendications 4 à 10, dans laquelle une ou plusieurs des couches de recouvrement intérieur et extérieur, ainsi que le déflecteur de convection présentent au moins un revêtement antiréfléchissant (501-510).

12. Une structure telle que revendiquée à la revendication 1, dans laquelle la couche d'isolation thermique comprend entre trois et dix couches (511-515) qui sont sensiblement transparentes à la lumière et sensiblement réfléchissantes ou absorbantes du rayonnement thermique, avec chaque couche séparée de la couche adjacente par une couche de gaz.

13. Une structure telle que revendiquée à la revendication 1, dans laquelle la couche d'isolation thermique comprend une couche de matière à base d'aérogel.

14. Une structure telle que revendiquée dans une quelconque des revendications précédentes, dans laquelle la couche de recouvrement intérieur absorbe essentiellement la lumière (17, 515).

15. Une structure telle que revendiquée à la revendication 1, dans laquelle la couche de recouvrement intérieur présente un revêtement de faible émissivité (509).

16. Une structure telle que revendiquée à la revendication 14 ou 15, dans laquelle la couche de recouvrement intérieur présente une couche de faible émissivité absorbant la lumière (509).

17. Une structure telle que revendiquée à la revendication 15, dans laquelle la couche de recouvrement extérieur présente un revêtement transparent de faible émissivité (502).

18. Une structure telle que revendiquée dans l'une quelconque des revendications 15 à 17 comprenant un vide entre les couches de recouvrement intérieur et extérieur.

19. Une structure telle que revendiquée dans l'une quelconque des revendications précédentes, dans laquelle la couche de recouvrement intérieur (515) comprend une cellule photoélectrique (509).

20. Une structure telle que revendiquée dans l'une quelconque des revendications précédentes, dans laquelle la couche de matière d'obturation optique ou au moins l'une de ces couches est photochrome.

21. Une structure telle que revendiquée dans l'une quelconque des revendications 1 à 19, dans laquelle la couche de matière d'obturation optique ou au moins l'une de ces couches est thermophotochrome.

22. Une structure telle que revendiquée dans l'une quelconque des revendications 1 à 19, dans laquelle la couche de matière d'obturation optique ou au moins l'une de ces couches est électrochrome.

23. Une structure telle que revendiquée dans l'une quelconque des revendications 1 à 19, dans laquelle la couche de matière d'obturation optique ou au moins l'une de ces couches est thermochrome.

24. Une structure telle que revendiquée à la revendication 23, et à la revendication 2 ou 3, avec des obturateurs thermochromes (502 et 509) placés à la fois sur les couches de recouvrement intérieur et extérieur (511 et 515), et avec une couche d'isolation thermique laissant passer la lumière qui est composée d'un ou de plusieurs revêtements transparents de faible émissivité placés de manière adjacente à une à trois couches soit de vide, soit de gaz.

25. La structure telle que revendiquée à la revendication 24, avec l'isolant qui comprend une à trois couches de vide, et avec un recouvrement intérieur qui transmet essentiellement la lumière.

26. La structure telle que revendiquée à la revendication 24, avec l'isolant qui comprend une à trois couches de vide, et avec un recouvrement intérieur qui absorbe essentiellement la lumière.

27. La structure telle que revendiquée à la revendication 24, avec l'isolant qui comprend des couches de gaz, et avec un recouvrement intérieur qui transmet essentiellement la lumière.

28. La structure telle que revendiquée à la revendication 24, avec l'isolant qui comprend des couches de gaz, et avec un recouvrement intérieur qui absorbe essentiellement la lumière.

29. Une structure telle que revendiquée dans l'une quelconque des revendications précédentes, comprenant au moins un revêtement antiréfléchissant (501-510).

30. Une structure telle que revendiquée à la revendication 29, dans laquelle le ou chaque revêtement antiréfléchissant (501-510) présente un indice de réfraction échelonné.

31. Une structure telle que revendiquée à la revendication 29, dans laquelle le ou chaque revêtement antiréfléchissant (501-510) est réalisé à partir d'un polymère fluoré.

32. Une structure telle que revendiquée à la revendication 29, dans laquelle le ou chaque revêtement antiréfléchissant (501-510) est réalisé à partir d'un oxyde métallique poreux ou prismatique.
